# EUROPÄISCHE PATENTSCHRIFT

(11) **EP 0 715 941 B1**
(45) Veröffentlichungstag und Bekanntmachung des Hinweises auf die Patenterteilung: **26.04.2000**
(21) Anmeldenummer: 95115194.3
(22) Anmeldetag: 27.09.1995
(51) Int. Cl.: B29C 45/67, B29C 45/06

(54) **Schliesseinheit für eine Spritzgiessmaschine**
Closing unit for an injection moulding machine
Unité de fermeture pour une machine à mouler par injection

(30) Priorität: 08.12.1994 DE 4443689
(43) Veröffentlichungstag der Anmeldung: 12.06.1996
(73) Patentinhaber: Krauss-Maffei Kunststofftechnik GmbH, 80997 München (DE)
(72) Erfinder: Brams, Peter, D-80935 München (DE); Mandl, Werner, D-85250 Unterzeitlbach (DE)
(74) Vertreter: Rucker, Bernd, Dipl.-Ing.

(56) Entgegenhaltungen:
- EP-A- 0 459 947
- WO-A-88/09256
- WO-A-94/17977
- DE-A- 1 957 052
- DE-B- 1 109 356
- PATENT ABSTRACTS OF JAPAN vol. 005, no. 119 (M-081), 31.Juli 1981 & JP-A-56 058841 (SEKISUI CHEM CO LTD), 22.Mai 1981,
- PATENT ABSTRACTS OF JAPAN vol. 010, no. 118 (M-475), 2.Mai 1986 & JP-A-60 247522 (TOSHIBA KIKAI KK), 7.Dezember 1985,
- PATENT ABSTRACTS OF JAPAN vol. 011, no. 339 (M-639), 6.November 1987 & JP-A-62 121023 (NIIGATA ENG CO LTD), 2.Juni 1987,

## Beschreibung

Die Erfindung bezieht sich auf eine Schließeinheit für eine Spritzgießmaschine gemäß dem Oberbegriff des Patentanspruchs 1.

Nach der deutschen Patentschrift DE 37 18 106 ist eine Schließeinheit für Spritzgießmaschinen bekannt, wobei die verschiebbare Werkzeugaufspannplatte in einer Linearwälzführung auf dem Maschinenbett geführt ist und mittels einer über zwei symmetrisch angeordnete Kugel spindeln aufgebrachten Axialzugkraft gegen die feste Werkzeugaufspannplatte gezogen wird. Die Nachteile bei an Holmen geführten Werkzeugaufspannplatten wie z.B die nicht präzise Parallelführung der beweglichen Platte werden durch eine derartige Anordnung aber nur teilweise aufgehoben.

Dagegen ist die zum Aufspannen der Werkzeuge zur Verfügung stehende Fläche ähnlich wie bei der Ausführung mit Holmen durch die seitliche Anordnung der Kugelspindeln begrenzt und erschwert den Zugang zu den aufzuspannenden Werkzeugen.

Aus der deutschen Offenlegungsschrift 1 957 052 ist es bekannt, mittels einer auf Zug beanspruchten Stange (Arbeitskolben) das bewegliche Teil einer Schere, Presse, Schmiedemaschine oder dergleichen, gegenüber dem festen Teil der Maschine zu bewegen. Zum Ausgleich der Arbeitskräfte ist diametral auf der der Arbeitsseite gegenüberliegenden Seite eine weitere Kolben-Zylinder-Einheit vorgesehen und so angeordnet, daß mit dieser ein derart großes Moment aufgebracht werden kann, daß das Moment aus Arbeitsdruck mit dem Abstand der die Arbeit durchführenden Stange ausgeglichen wird. Das Anordnen mehrerer Werkzeuge um den Arbeitskolben herum ist bei dieser Maschine nicht oder zumindest nicht ohne weiteres möglich und würde der technischen Lehre dieses Gegenstands entgegenstehen.

Der Erfindung liegt daher die Aufgabe zugrunde, für eine holmlose Spritzgießmaschine eine Schließeinheit mit präziser Parallelführung zu schaffen, deren Werkzeugaufspannplatten eine möglichst große Fläche zum Aufspannen von mehreren Werkzeugen bei freiem Zugang von mehreren Seiten aufweisen.

Diese Aufgabe wird gemäß den Merkmalen des Patentanspruchs 1 gelöst.

Zweckmäßige Weiterbildungen der Erfindung sind in den abhängigen Ansprüchen beschrieben.

Die erfindungsgemäße Schließeinheit ermöglicht sowohl eine Doppel-oder Mehrfachproduktion mit gleichen Werkzeugen, wie z.B. zur CD-Herstellung als auch eine Produktion mit verschiedenen Werkzeugen, z.B. zur Herstellung eines Gehäuses und des zugehörigen Deckels oder auch verschiedenfarbiger Teile bzw. unterschiedlicher Massen. Falls nur ein Werkzeug aufgespannt werden soll, können zum Ausgleich anstelle eines zweiten Werkzeugs auch ein Paar Stützblöcke bzw. Abstandshalter verwendet werden.

In vorteilhafter Ausbildung der Erfindung ist die bewegliche Werkzeugaufspannplatte um die Stange drehbar angeordnet und mehrere Werkzeuge nach Art eines Trommelrevolvers aufspannbar. Mit einer derartigen Anordnung können z.B. mehrere CD's in ein und demselben Vorgang hergestellt werden.

Die Schließeinheit mit den Werkzeugaufspannplatten und der Zugstange kann sowohl horizontal als auch vertikal angeordnet sein.

Bei horizontaler Anordnung sind die Werkzeugaufspannplatten vorteilhaft auf einem Maschinenbett horizontal gleitbar abgestützt und in Kugelbahnen mit einem integrierten Wegemeßsystem gelagert.

Bei vertikaler Anordnung ergibt sich vorteilhaft allseitig ein freier Zugang zur Aufspannfläche sowie eine besonders kompakte Bauweise der Maschine.

An den Werkzeugaufspannplatten vorteilhaft angeordnete Sensoren stellen sicher, daß alle Werkzeughälften eingebaut sind und beim Schließvorgang keine Beschädigungen entstehen können.

In der Zeichnung sind Ausführungsbeispiele der Erfindung dargestellt. Es zeigen:
- Fig. 1: Eine Spritzgießmaschine mit zwei Spritzgießeinheiten in einer Seitenansicht,
- Fig. 2: eine Spritzgießmaschine gemäß Fig. 1 in der Draufsicht,
- Fig. 3: eine Spritzgießmaschine entsprechend Fig. 1, zusätzlich mit integriertem Drehtisch,
- Fig. 4: eine Draufsicht gemäß Fig. 3,
- Fig. 5: den Drehtisch gemäß Fig. 3 und 4 in einer Vorderansicht,

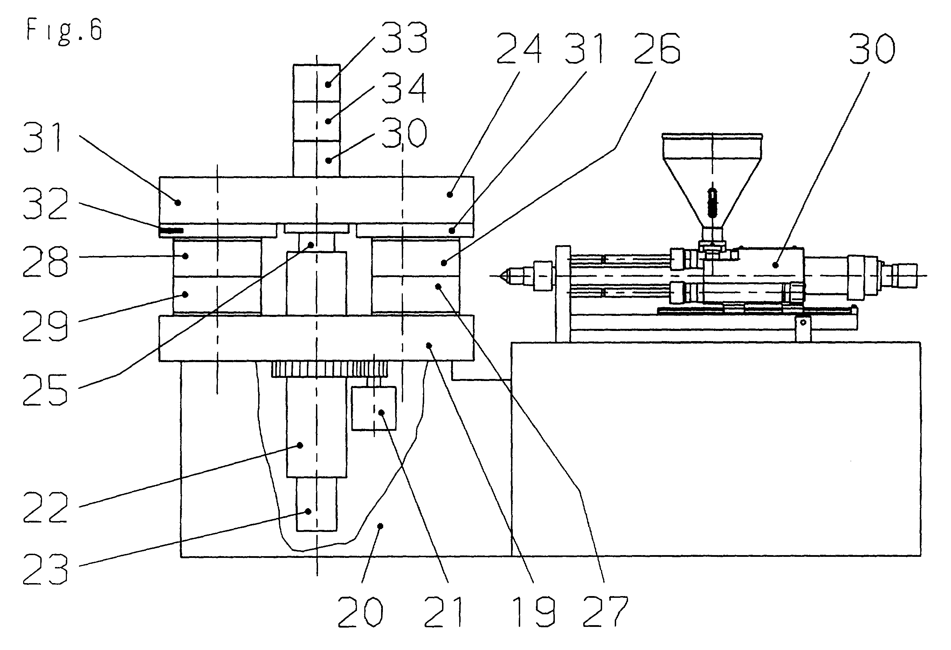

- Fig. 6: eine vertikal angeordnete Spritzgießmaschine.

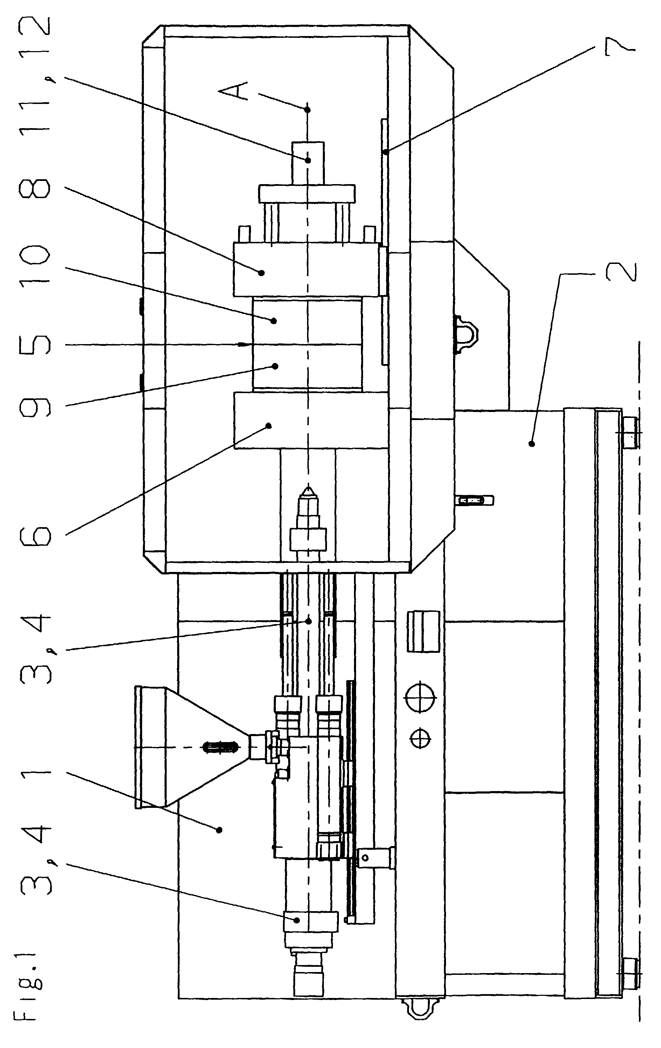

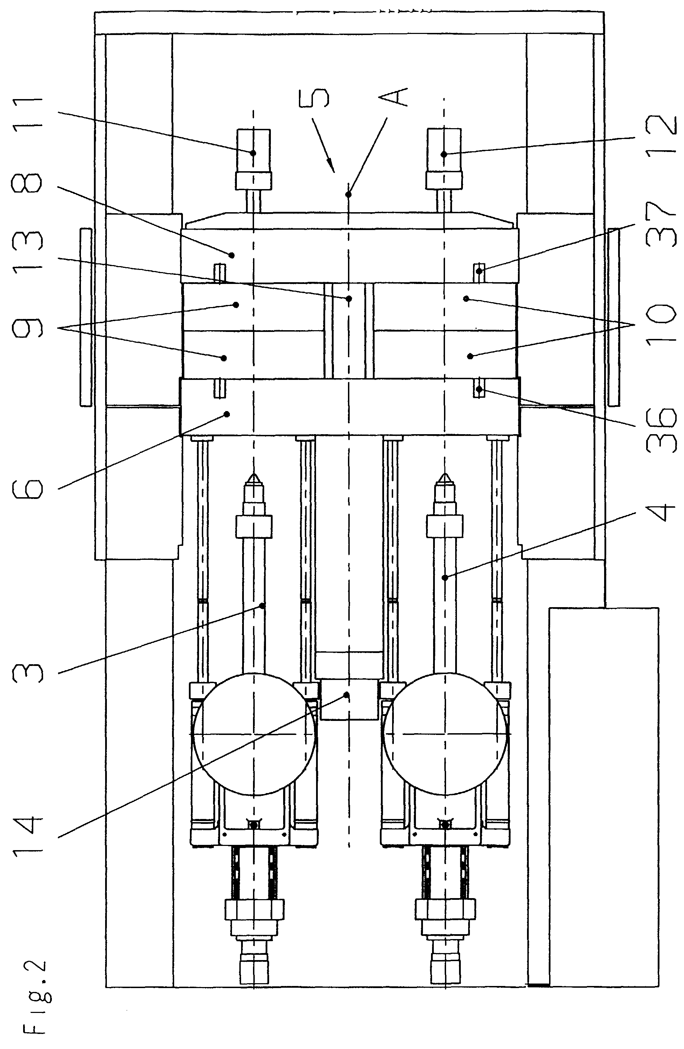

Eine Spritzgießmaschine 1 der gemäß Fig. 1 und 2 dargestellten Art besteht im wesentlichen aus einem Maschinenbett 2, zwei Spritzgießeinheiten 3 und 4 sowie einer Schließeinheit 5, die symmetrisch zur Mittellängsachse A der Spritzgießmaschine 1 angeordnet sind. Die Schließeinheit 5 besteht aus einer axial festen 6 und einer auf einer Gleitschiene 7 gleitbar abgestützten, axial beweglichen Werkzeugaufspannplatte 8 mit darauf aufgespannten aus Werkzeughälften bestehenden Werkzeugen 9, 10 sowie Auswerfern 11, 12 für die Spritzgießteile. Die bewegliche Werkzeugaufspannplatte 8 ist mit einer Stange 13 fest verbunden, die als Kolbenstange Bestandteil einer Kolben-Zylindereinheit 14 mit einem Schließzylinder und durch die feste Werkzeugaufspannplatte 6 frei hindurchgeführt ist.

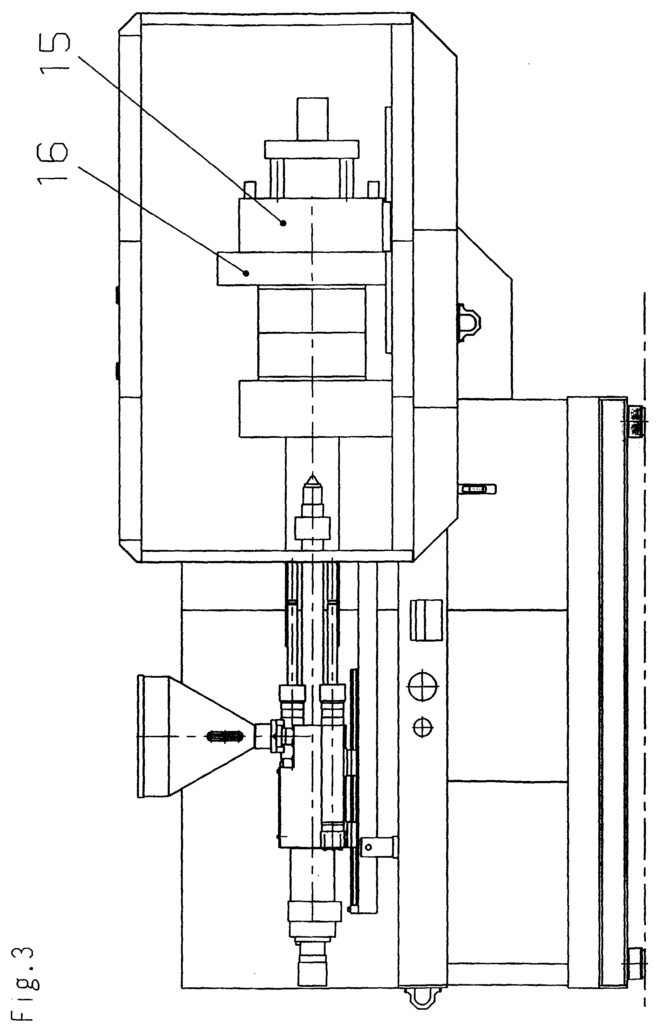

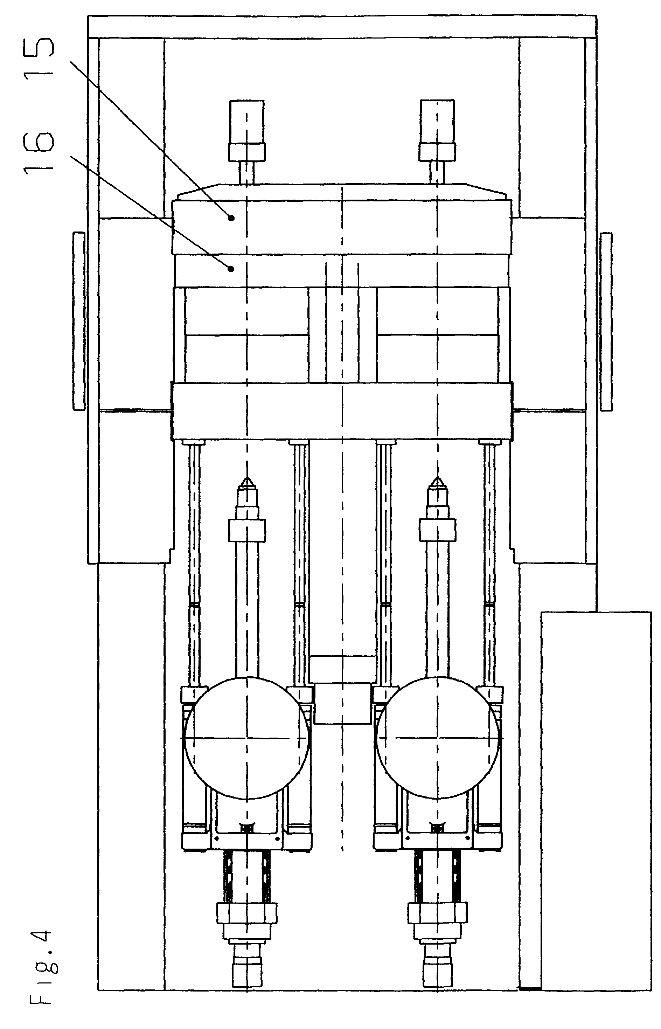

Nach Fig. 3 und 4 ist an einer axial beweglichen Werkzeugaufspannplatte 15 ein Drehtisch 16 angeordnet.

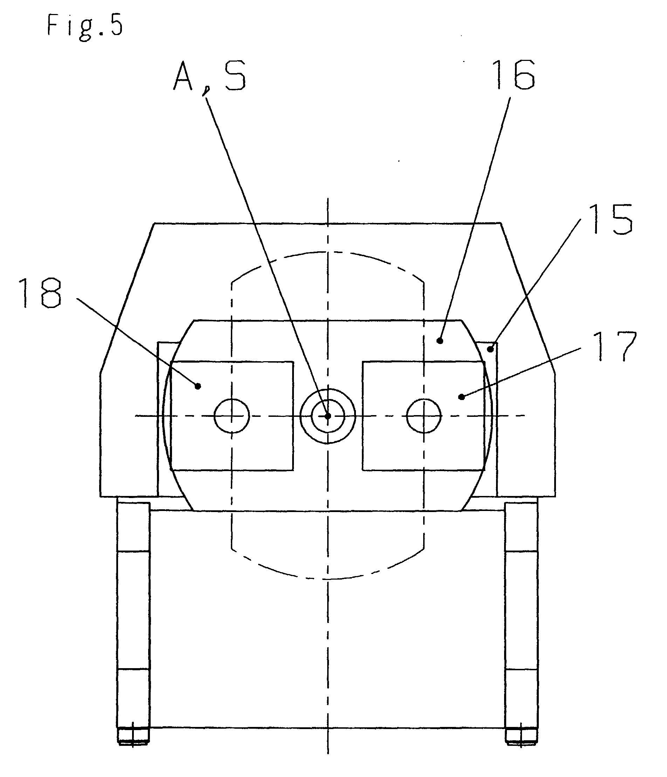

Gemäß Fig. 5 sind auf dem um die Mittellängsachse A drehbaren Drehtisch 16 zwei Werkzeughälften 17 und 18 symmetrisch zur Mittellängsachse A und zum Schwerpunkt S des Drehtisches 16 bzw. der axial beweglichen Aufspannplatte 15 angeordnet.

Bei der vertikalen Anordnung ist eine untere, axial feste Werkzeugaufspannplatte 19 als Rundtisch mit einem Rundtischständer 20 und einem Antrieb 21 ausgebildet. Mittels eines Fahrzylinders 22 mit einem Druckübersetzer 23 wird eine obere, axial bewegliche Werkzeugaufspannplatte 24 mittels einer daran befestigten Stange 25 auf den Rundtisch 19 herabgezogen und damit die Werkzeughälften 26 und 27 sowie 28 und 29 für den Spritzvorgang zusammengeführt. Für den Spritzvorgang sind ein bzw. mehrere Spritzaggregate 30 vorgesehen. An der axial beweglichen Werkzeugaufspannplatte 24 sind Druckverteiler 31 sowie ein Sensor 32, oberhalb davon Drehverteiler 33, 34, 35 für die Zuführung von Druckluft, Wasser und Strom vorgesehen.

## Patentansprüche

1. Schließeinheit für eine holmlose Spritzgießmaschine mit einer axial festen und einer damit korrespondierenden axial beweglichen Werkzeugaufspannplatte (6; 8) zum Aufspannen von Formwerkzeugen (9, 10) mit einem Antrieb zum Bewegen der axial beweglichen gegenüber der axial festen Werkzeugaufspannplatte (8; 6) mittels Axialzugkraft, **dadurch gekennzeichnet,** daß die axial bewegliche Werkzeugaufspannplatte (8) mittels einer daran innerhalb des Aufspannbereichs befestigten und beim Schließvorgang auf Zug beanspruchten Stange (13) gegenüber der axial festen Werkzeugaufspannplatte (6) bewegbar ist, und daß die Stange (13) in der Mittellängsachse (A) der Spritzgießmaschine und im Schwerpunkt (S) von zwei oder mehreren aufgespannten Formwerkzeugen (9,10) angeordnet ist.

2. Schließeinheit nach Anspruch 1, **dadurch gekennzeichnet,** daß die Stange (13) als Kolbenstange einer Kolben-Zylindereinheit ausgebildet ist.

3. Schließeinheit nach den Ansprüchen 1 und 2 oder einem derselben, **dadurch gekennzeichnet,** daß die axial bewegliche Werkzeugaufspannplatte (8) mit einem um die Mittellängsachse (A) drehbaren Rundtisch (16) zum Aufspannen von mehreren Werkzeugen nach Art eines Trommelrevolvers versehen ist.

4. Schließeinheit nach den Ansprüchen 1 bis 3 oder einem derselben, **dadurch gekennzeichnet,** daß die axial bewegliche Werkzeugaufspannplatte (8) auf einem Maschinenbett (2) horizontal gleitbar über eine Gleitschiene (7) abgestützt ist.

5. Schließeinheit nach Anspruch 4, **dadurch gekennzeichnet,** daß die axial bewegliche Werkzeugaufspannplatte (8) auf dem Maschinenbett (7) in Kugelbahnen mit einem integrierten Wegemeßsystem gelagert ist.

6. Schließeinheit nach den Ansprüchen 1 bis 3 oder einem derselben, **dadurch gekennzeichnet**, daß die Werkzeugaufspannplatten (19,24) und die Stange (25) vertikal angeordnet sind.

7. Schließeinheit nach Anspruch 6, **dadurch gekennzeichnet,** daß die axial feste Werkzeugaufspannplatte (19) als Rundtisch unterhalb der axial beweglichen Werkzeugaufspannplatte (24) angeordnet ist.

8. Schließeinheit nach den Ansprüchen 1 bis 7 oder einem derselben, **dadurch gekennzeichnet,** daß an der beweglichen Werkzeugaufspannplatte und/oder der festen Werkzeugaufspannplatte jeweils ein oder mehrere Sensoren (32) angeordnet sind.

## Claims

1. Closing unit for a sparless injection moulding machine having an axially fixed and an axially movable tool clamping plate (6; 8) corresponding to the latter for clamping form tools (9; 10), and having a drive for moving the axially movable tool clamping plate with respect to the axially fixed one (8; 6) by means of an axial tensile force, characterized in that said axially movable tool clamping plate (8) is movable with respect to said axially fixed tool clamping plate (6) by means of a rod (13) secured thereto within a clamping region and exposed to a tensile load during the closing process, and in that said rod (13) is arranged in the median longitudinal axis (A) of the injection moulding machine and in the center of gravity (S) of two or more clamped form tools (9, 10).

2. Closing unit according to claim 1, characterized in that said rod (13) is formed as a piston rod in a piston-cylinder unit.

3. Closing unit according to claims 1 and 2 or one of them, characterized in that said axially movable tool clamping plate (8) is provided with a circular table (16) rotatable around said median longitudinal axis (A) for clamping several tools in a drum turret like manner.

4. Closing unit according to claims 1 to 3 or one of them, characterized in that said axially movable tool clamping plate (8) is supported on a machine bed (2) in a horizontally gliding manner through a gliding rail (7).

5. Closing unit according to claim 4, characterized in that said axially movable tool clamping plate (8) is supported on said machine bed (7) in ball transfer tables with an integrated path measuring system.

6. Closing unit according to claims 1 to 3 or one of them, characterized in that said tool clamping plates (19; 24) and the rod (25) are arranged vertically.

7. Closing unit according to claim 6, characterized in that the axially fixed tool clamping plate (19) is arranged as a circular table below the axially movable tool clamping plate (24).

8. Closing unit according to claims 1 to 7 or one of them, characterized in that one or several sensors (32) are arranged at said movable tool clamping plate and/or said fixed tool clamping plate.

## Revendications

1. Unité de fermeture pour une machine à mouler par injection sans longerons, comportant une plaque (6) de serrage de l'outil fixe selon la direction axiale et une plaque (8) de serrage de l'outil, mobile selon la direction axiale, qui y correspond, pour serrer des outils de moulage (9, 10) au moyen d'un mécanisme d'entraînement pour, au moyen d'une force de traction selon la direction axiale, déplacer la plaque de serrage (8) mobile selon la direction axiale par rapport à la plaque de serrage (6) fixe selon la direction axiale, caractérisée par le fait que la plaque (8) de serrage de l'outil mobile selon la direction axiale peut se déplacer par rapport à la plaque (6) de serrage de l'outil fixe selon la direction axiale au moyen d'une tige (13) fixée à la plaque mobile à l'intérieur de la plage de serrage et sollicitée en traction lors du processus de fermeture, et que la tige (13) est disposée sur l'axe longitudinal (A) de la machine à mouler par injection et au centre de gravité (S) de deux ou plusieurs outils de moulage serrés (9, 10).

2. Unité de fermeture selon la revendication 1, caractérisée par le fait que la tige (13) est conçue en tant que tige de piston d'un vérin.

3. Unité de fermeture selon les revendications 1 et 2 ou l'une d'elles, caractérisée par le fait que la plaque (8) de serrage de l'outil mobile selon la direction axiale comporte un plateau tournant (16) pouvant tourner autour de l'axe longitudinal (A) pour serrer plusieurs outils à la façon d'un revolver en tambour.

4. Unité de fermeture selon les revendications 1 à 3, ou l'une d'elles, caractérisée par le fait que la plaque (8) de serrage de l'outil mobile selon la direction axiale s'appuie sur un bâti de machine (2) avec liberté de coulisser horizontalement par l'intermédiaire d'un glissière (7).

5. Unité de fermeture selon la revendication 4, caractérisée par le fait que la plaque (8) de serrage de l'outil, mobile selon la direction axiale, est portée sur la bâti de machine (7) sur des glissières à billes avec un système intégré de mesure du chemin parcouru.

6. Unité de fermeture selon les revendications 1 à 3 ou l'une d'elles, caractérisée par le fait que les plaques (19, 24) de serrage de l'outil et la tige (25) sont disposées verticalement.

7. Unité de fermeture selon la revendication 6, caractérisée par le fait que la plaque (19) de serrage de l'outil, fixe selon la direction axiale, est disposée, sous forme de plateau tournant, en-dessous de la plaque (24) de serrage de l'outil mobile selon la direction axiale.

8. Unité de fermeture selon les revendications 1 à 7, où l'une d'elles, caractérisée par le fait que sur la plaque mobile de serrage de l'outil et/ou sur la plaque fixe de serrage de l'outil sont chaque fois disposés un ou plusieurs détecteurs (32).
